# FASCICULE DE BREVET EUROPEEN

(11) **EP 1 042 397 B1**
(45) Date de publication et mention de la délivrance du brevet: **02.05.2003**
(21) Numéro de dépôt: 98962505.8
(22) Date de dépôt: 18.12.1998
(51) Int. Cl.: C08K 5/00, C08L 83/04, B29C 33/40

(54) **STABILISATION DES MOULES EN ELASTOMERE SILICONE**
STABILISATION VON FORMEN AUS SILIKON-ELASTOMER
STABILISATION OF SILICON-ELASTOMER MOULDS

(30) Priorité: 26.12.1997 FR 9716816
(43) Date de publication de la demande: 11.10.2000
(60) Demande divisionnaire: 02025475.1
(73) Titulaire: RHODIA CHIMIE, 92408 Courbevoie Cédex (FR)
(72) Inventeur: GAY, Michel, F-69100 Villeurbanne (FR); HOWE, Fabienne, F-69300 Caluire (FR); PUSINERI, Christian, F-69360 Serezin du Rhône (FR); VIENNET, Joelle, Chemin Peu, 69440 Mornant (FR)
(74) Mandataire: Trolliet, Maurice
(86) Numéro de dépôt international: FR9802777
(87) Numéro de publication internationale: WO99033911

(56) Documents cités:
- EP-A- 0 070 786
- EP-A- 0 076 630
- EP-A- 0 787 766
- DE-A- 4 310 593
- FR-A- 2 208 937
- PATENT ABSTRACTS OF JAPAN vol. 008, no. 134 (C-230), 21 juin 1984 & JP 59 045329 A (TOUSHIBA SILICONE KK), 14 mars 1984

## Description

La présente invention a trait à l'utilisation d'additifs pour la stabilisation des élastomères silicones constitutifs de moules et obtenus par la réticulation de compositions de polycondensation.

L'invention a également pour objet des compositions de polycondensation susceptibles d'être utilisées pour la réalisation de ces élastomères silicones.

L'invention a encore pour objet les moules ainsi obtenus pour la reproduction d'objets décoratifs et industriels par moulage.

Elle a aussi pour objet un procédé de préparation de moules en silicone.

Les compositions silicones, en particulier les compositions silicones de polycondensation, sont utilisées pour la reproduction d'objets décoratifs et industriels par moulage. La reproduction d'objets consiste dans un premier temps à fabriquer un négatif de l'objet à copier, ce négatif étant réalisé en élastomère silicone et se nomme membrane. Après réticulation du silicone, on sépare la membrane de l'objet initial. Cette membrane constitue le moule qui servira à la reproduction de l'objet à copier.

On utilise largement ce type de moule pour la reproduction d'objets en résine telle que résine de polyester, apte à reproduire fidèlement les détails les plus fins de l'objet à copier. De nombreuses reproductions peuvent être ainsi fabriquées. Mais au court de cette utilisation, le moule subit des modifications progressives : les constituants des résines polyesters, et en particulier le styrène, diffusent dans la membrane et se polymérisent. En parallèle, la structure physico-chimique du moule au contact des résines évolue : elle durcit progressivement tout en perdant son caractère anti-adhérant et sa résistance au déchirement. Ces modifications conduisent finalement à l'arrachement de fragments superficiels du moule au moment du démoulage de la pièce en polyester. A ce stade, le moule n'est plus utilisable.

Les mécanismes de dégradation mis en jeu sont divers. Ils peuvent dépendre tout aussi bien de critères liés aux élastomères silicones qu'aux résines ou aux conditions de moulage. Par exemple l'utilisation de résines à haute teneur en styrène ou en peroxyde est un facteur d'aggravation car il accroît les possibilités de diffusion du styrène ou du peroxyde. Le caractère exothermique de la polymérisation de la résine est aussi un facteur d'aggravation. Les diversités des facteurs pouvant affluer sur la dégradation du moule en silicone fait que, jusqu'à ce jour, les solutions proposées non jamais été parfaitement satisfaisantes.

La demande de brevet européen EP-A-787 766 propose d'améliorer la longévité des moules en silicone en incorporant à la composition de polycondensation un additif sélectionné dans un groupe constitué de phénols à empêchement stérique, bisphénols à empêchement stérique, thiobisphénols à empêchement stérique, dialkyldithiophosphates de zinc, diaryldithiophosphates de zinc, amines aromatiques, amines à empêchement stérique qui peuvent être des 1-alkylsébaçates à groupement terminal NR.

Le besoin existe toujours d'une amélioration de la durée de vie des moules silicones et donc d'additifs permettant d'atteindre cet objectif.

La présente invention a donc pour objectif de proposer des additifs permettant de protéger l'élastomère constituant le moule en silicone vis-à-vis de la résine servant à produire la pièce à mouler, en particulier résine de polyester, de manière à permettre la réalisation d'un nombre de moulages supérieur à ce qui était réalisable auparavant, tout en maintenant, voire en améliorant, l'aspect de surface des pièces moulées.

La déposante a trouvé que des additifs contenant dans leur structure des groupements R-S-R permettent d'accroître la longévité des moules en silicone dans des proportions inattendues, le moule en silicone provenant de la réticulation d'une composition de polycondensation.

La déposante a aussi trouvé que l'association de ces additifs avec des phosphites ainsi que l'association de ces additifs et/ou ou de phosphites avec un additif capable de générer des groupes 〉N - O• permettaient encore d'accroître la longévité des moules, ces additifs se comportant de façon synergique.

La déposante a aussi trouvé de manière suprenante que les additifs capables de générer des groupes 〉N - O• étaient efficaces en association y compris les 1-alkylsébaçates à groupement terminal -NOR, alors que les mêmes 1-alkylsébaçates à groupement -NR tels que décrits dans EP-A-787 766 n'entraient pas en synergie avec les autres additifs selon l'invention.

L'incorporation de thioesters dans une composition silicone a déjà été décrite.

EP-A-076 630 concerne le cas particulier des compositions silicone de polycondensation catalysées par un catalyseur à base de titane chélaté. L'addition d'un thioester ou d'autres additifs tels que le di-butyltertiaire phénol évite que, sous l'effet du catalyseur au titane chélaté, l'élastomère se teinte en jaune au cours du temps.

EP-A-654 497 concerne le cas particulier des compositions silicone de polyaddition comportant un agent de contrôle de la réticulation destiné à éviter une gélification prématurée à température ambiante, ce qui permet de stabiliser la composition que l'on réticulera au moment opportun par chauffage. Comme agent de contrôle de la réticulation, cette demande propose des triazines ayant au moins un groupe peroxy sur un atome de carbone du noyau triazine et/ou un composé organosulfuré de formule R⁶-(S)ₘ-R⁷, dans laquelle R⁶ et R⁷ sont des groupes ayant au moins 3 atomes de carbone monovalent ou un groupe hydrocarboné monovalent présentant une liaison ester ou R⁶ et R⁷ pris ensemble forment un cycle, m étant un nombre entier de 1 à 3.

La présente invention a pour objet l'utilisation, pour augmenter la longévité des moules réalisés en élastomère silicone réticulant par réaction de polycondensation, d'additif capable de stabiliser l'élastomère silicone constituant le moule vis-à-vis des matières à mouler, l'additif étant choisi dans le groupe consistant en :
- (a) additifs antioxydant pris dans le groupe formé par :
   (a-i) un thiodipropionate de formule : 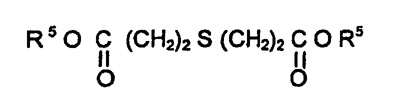 dans laquelle R⁵ est un groupe alkyle ayant de 1 à 15 atomes de carbone inclus, et
   (a-2i) un tétra(thioéther)pentaérythritol où les restes thoiéthers sont des groupements thiopropionates ;
- association synergique (a) + (b), où (b) correspond à des additifs inhibiteurs de radicaux libres capables, dans les conditions du moulage, de générer des radicaux : 〉N-O•, choisis parmi les composés de formule :
- 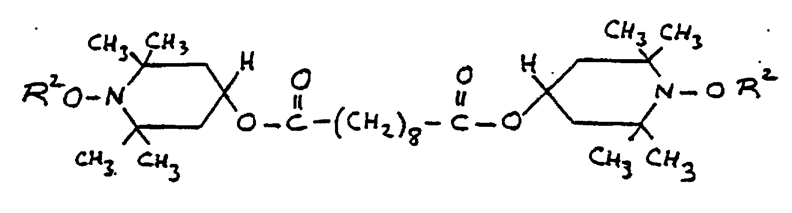 où R² est un alkyle linéaire ou ramifié en C1 à C18, éventuellement substitué par un ou plusieurs groupes phényle(s), ou un cycloalkyle en C5 à C6 ou un benzyle,
- association synergique (a) et (b) avec des phosphites (c) où les phosphites (c) sont choisis parmi des phosphites mixtes d'aryle et d'alkyle des formules V à XIII suivantes : 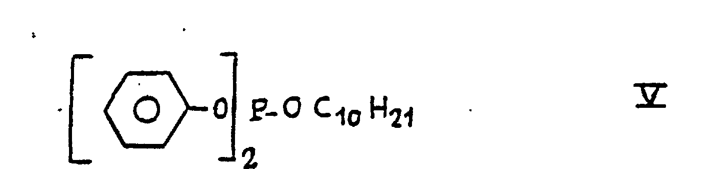 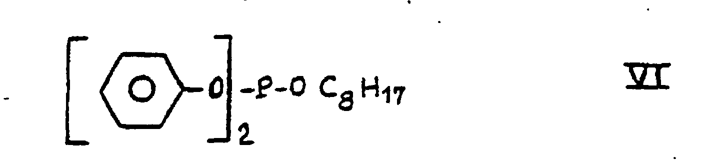 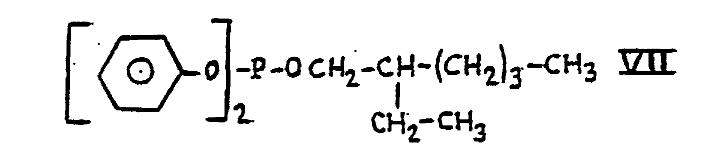 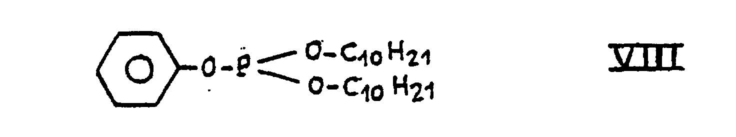 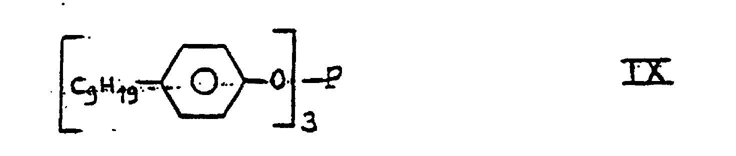 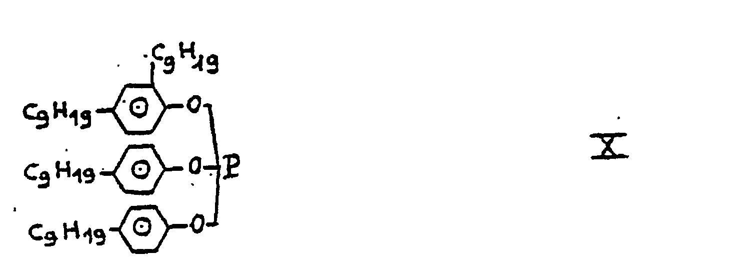 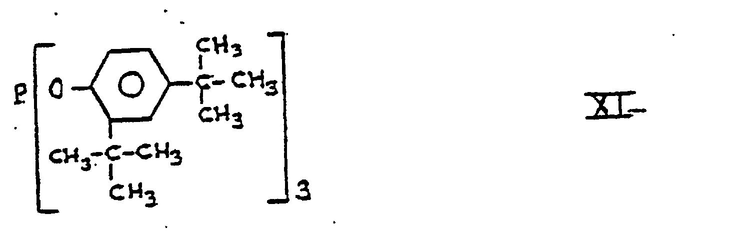 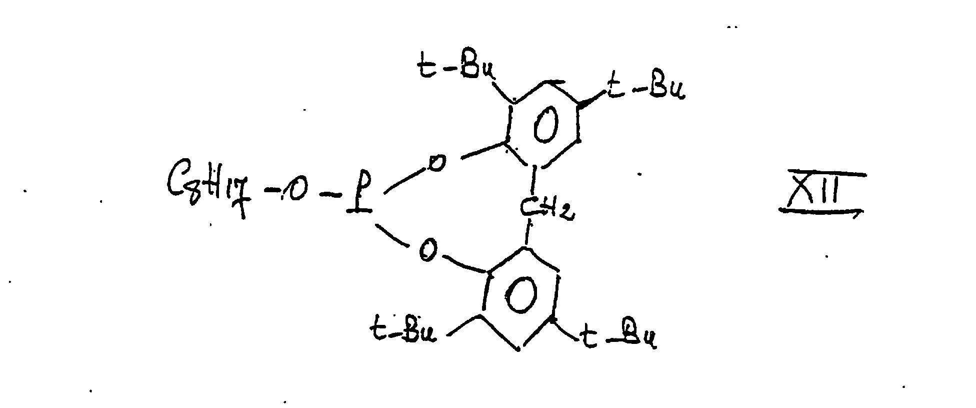 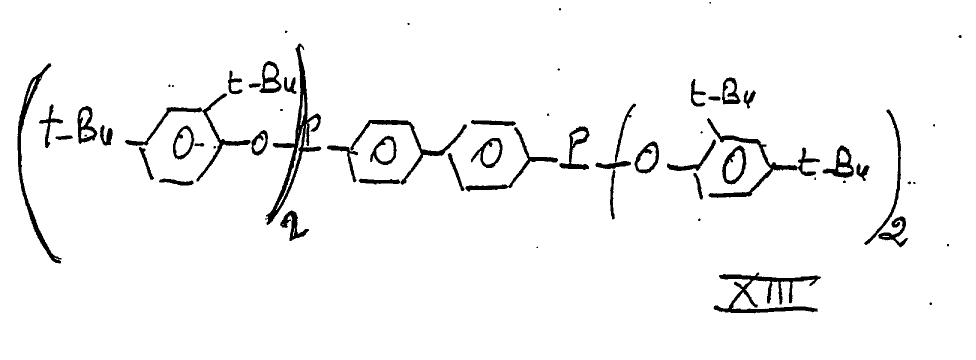
- l'additif (a) étant utilisé à raison de 1 à 5 parties en poids, l'additif (b) étant utilisé à raison de 0,2 à 1 partie en poids et l'additif (c) étant utilisé à raison de 0,05 à 1 partie en poids, pour 100 parties de composition silicone servant à réaliser l'élastomère silicone.

Plus particulièrement, l'invention a pour objet une telle utilisation pour la stabilisation des élastomères silicones constitutifs de moules destinés au moulage de pièces en polyester, afin d'empêcher notamment, au sein de l'élastomère silicone, la polymérisation du styrène issu de la résine polyester, sans gêner la polymérisation à coeur et en surface du polyester.

De manière particulièrement préférée, l'utilisation vise à l'obtention d'un nombre de moulages par moule en hausse de plus de 10 %, de préférence de plus de 20 %, plus particulièrement de plus de 30 %.

L'invention a aussi pour objet une composition silicone précurseur d'élastomère classique dans laquelle on ajoute un ou plusieurs additifs conformément à ce qui est décrit ci-dessus.

L'ensemble des caractéristiques données ci-après s'applique à ces deux objets.

Parmi les additifs (a), on préfère :
- (a-i) les thiodipropionates choisis dans le groupe consistant en :
   . ditridécyl thiodipropionate (CAS 10595-72-9)
   . distéaryl-3,3'-thiodipropionate (CAS 693-36-7)
   . dilauryl-3,3'-thiodipropionate (CAS 123-28-4) ;
- (a-2i) le tetra (lauryl thiopropionate) pentaérylthritol ou TLPE (CAS 29 598-76-3).

Les phosphites (c) selon l'invention sont des phosphites mixtes d'aryle et d'alkyle ayant les dénominations chimiques suivantes :
diphénylisodécylphosphite (V)
diphényl-iso-octyl-phosphite (VI)
diphényl-éthyl-2-hexyl-phosphite (VII)
diisodécylphénylphosphite (VIII)
trimonononylphénylphosphite (IX)
phosphite de 2,4-dinonylphényl et de di(4-monononylphényl) (X)
Tris (2,4-ditertiaire-butyl-phényl) phosphite (CAS 31570-04-4) (XI)
2,2-méthylène-bis-(4,6-di-t-butyl phényl) octyl phosphite (XII)

produit vendu sous la dénomination ®Sandostab P-EPQ par Sandoz AG Bâle, Suisse (XIII).

Les phosphites (c ) préférés sont choisis parmi les phosphites de formules XI et/ou XII.

Les additifs (b) comprennent de préférence le composé suivant : bis(1-octyloxy-2,2,6,6-tétraméthyl-4-pipéridyl)sébaçate de formule développée :

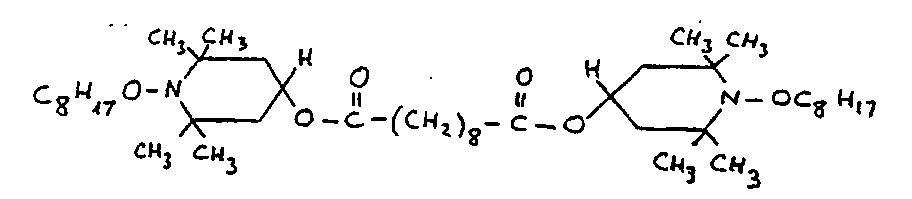

L'additif (a) peut être utilisé de préférence à raison de 1,5 à 3 parties en poids pour 100 parties de composition silicone.

L'additif (b) peut être utilisé comme indiqué ci-avant à raison de 0,2 à 1 parties en poids pour 100 parties de composition silicone, sachant qu'en générale la quantité optimale est de l'ordre de 0,5. Au delà, l'efficacité n'est pas accrue.

L'additif (c) peut être utilisé de préférence à raison de 0,1 à 0,3 parties en poids pour 100 parties de composition silicone.

La présente invention a aussi pour objet des compositions silicone bi-composantes précurseurs d'élastomère silicone, durcissables en un élastomère de silicone par des réactions de polycondensation, comprenant :
- (A) : 100 parties d'une huile alpha-oméga-dihydroxydiorganopolysiloxane de viscosité de 50 à 300 000 mPa.s dont les radicaux organiques sont choisis parmi les radicaux méthyle, éthyle, vinyle, phényle et trifluoro-3,3,3 propyle, au moins 60 % en nombre étant des radicaux méthyle, éventuellement jusqu'à 20 % en nombre étant des radicaux phényle, et éventuellement au plus 2 % étant des radicaux vinyle,
- (B) : de 0,5 à 15 parties d'un polyalcoxysilane ou polyalcoxysiloxane,
- (C) : de 0,01 à 1 partie (calculée en poids d'étain métal) d'un composé catalytique de l'étain,
- (D) : de 0 à 100 parties de charge minérale siliceuse et de 10 à 130 parties en poids d'huile(s) polydiméthylsiloxane(s) bloquée(s) à chacune des extrémités de chaînes par un motif (CH₃)₃SiO_{0,5} de viscosité comprise entre 10 et 5000 mPa.s,
- (E) : un additif capable de stabiliser l'élastomère silicone constituant le moule vis-à-vis des matières à mouler, l'additif étant choisi dans le groupe consistant en :
   - (a) additifs antioxydant pris dans le groupe formé par :
      (a-i) un thiodipropionate de formule : 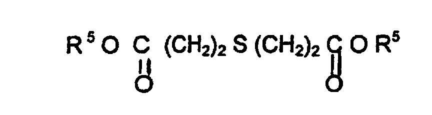 dans laquelle R⁵ est un groupe alkyle ayant de 1 à 15 atomes de carbone inclus, et
      (a-2i) un tétra(thioéther)pentaérythritol où les restes thoiéthers sont des groupements thiopropionates ;
   - association synergique (a) + (b) où (b) correspond à des additifs inhibiteurs de radicaux libres capables, dans les conditions du moulage, de générer des radicaux : 〉N-O•, choisis parmi les composés de formule : 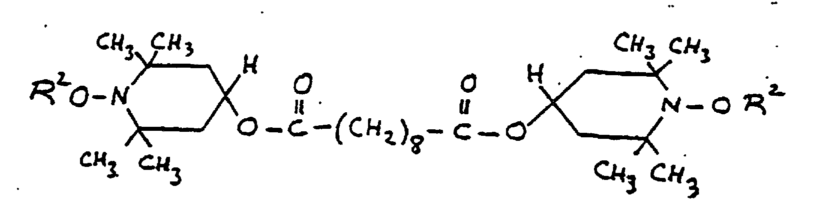 où R² est un alkyle linéaire ou ramifié en C1 à C18, éventuellement substitué par un ou plusieurs groupes phényle(s), ou un cycloalkyle en C5 à C6 ou un benzyle,
   - association synergique (a) et (b) avec des phosphites (c) où les phosphites (c) sont choisis parmi des phosphites mixtes d'aryle et d'alkyle des formules V à XIII suivantes : 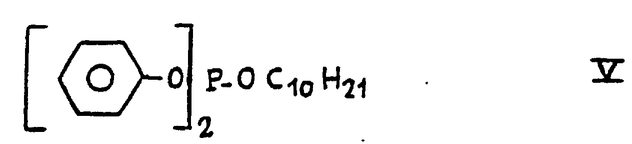 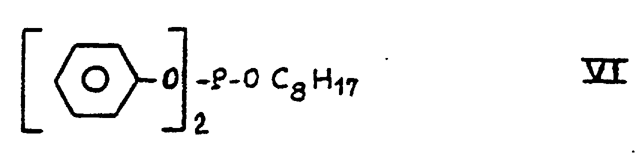 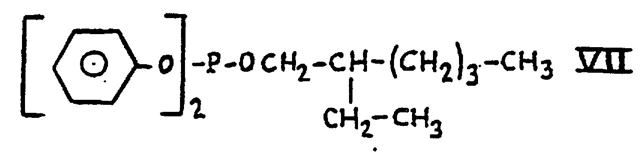 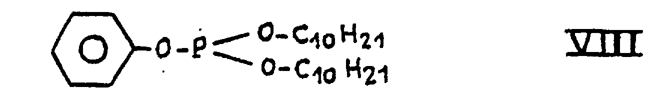 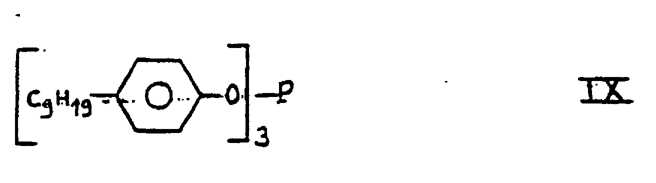 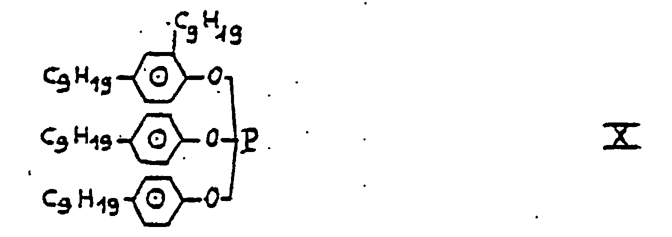 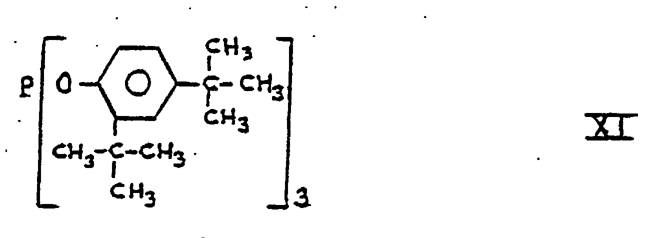 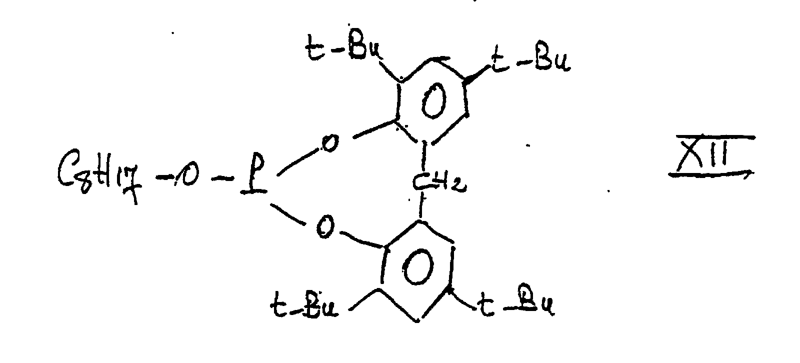 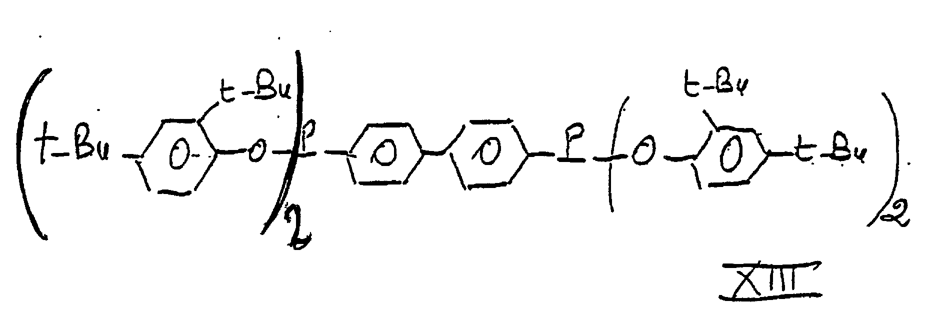
   - l'additif (a) étant utilisé à raison de 1 à 5 parties en poids, l'additif (b) étant utilisé à raison de 0,2 à 1 partie en poids et l'additif (c) étant utilisé à raison de 0,05 à 1 partie en poids, pour 100 parties de composition silicone servant à réaliser l'élastomère silicone.

Les diorganopolysiloxanes alpha-oméga dihydroxylés (A) sont généralement des huiles dont la viscosité, qui varie de 50 mPa.s à 300 000 mPa.s, est mesurée à 25°C ; ce sont des polymères linéaires constitués essentiellement de motifs diorganosiloxyles de formule (R₂ SiO).

Toutefois, la présence d'autres motifs, présents généralement à titre d'impuretés, tels que RSiO_{3/2}, RSiO_{1/2} et SiO_{4/2} n'est pas exclue dans la proportion notamment d'au plus 1 % par rapport au nombre de motifs diorganosiloxyles.

Les radicaux organiques, liés aux atomes de silicium des huiles de base, représentés par le symbole R, sont choisis parmi les radicaux méthyle, éthyle, vinyle, phényle et trifluoro-3,3,3 propyle.

Ces huiles de base sont, dans leur grande majorité, commercialisées par les fabricants de silicones. D'autre part, leurs techniques de fabrication sont bien connues ; on les trouve décrites par exemple dans les brevets français FR-A-1 134 005, FR-A-1 198 749, FR-A-1 226 745.

Comme exemples de silane monomère (B) qui, associés à des polydiorganosiloxanes alpha-oméga dihydroxylés (A), peuvent être utilisés avantageusement en compositions bi-composantes, on peut citer les polyalcoxysilanes et en particulier ceux de formules :
Si(OC₂H₅ )₄ ; Si(O-n-C₃H₇ ) ₄ ; Si(O-isoC₃H₇ )₄; Si(OC₂H₄OCH₃ )₄ ; CH₃Si(OCH₃ )₃ ; CH₂ =CHSi(OCH₃)₃ ; CH₃Si(OC₂H₄OCH₃ )₃ ; ClCH₂Si(OC₂H₅) ₃ ; CH₂ = CHSi(OC₂H₄OCH₃ )₃

A tout ou partie des silanes monomères ci-dessus décrits on peut substituer des polyalcoxypolysiloxanes dont chaque molécule compte au moins deux, de préférence trois groupes hydrolysables.

Les agents réticulants (B) sont des produits accessibles sur le marché des silicones ; de plus leur emploi dans les compositions durcissant dès la température ambiante est connu ; il figure notamment dans les brevets français FR-A-1 126 411, FR-A-1 179 969, FR-A-1 189 216, FR-A-1 198 749, FR-A-1 248 826, FR-A-1 314 649, FR-A-1 423 477, FR-A-1 432 799 et FR-A-2 067 636.

Les compositions selon l'invention peuvent comporter en outre des charges (D), renforçantes ou semi-renforçantes ou de bourrage, qui sont choisies parmi les charges siliceuses.

Les charges renforçantes sont choisies de préférence parmi les silices de combustion et les silices de précipitation. Elles ont une surface spécifique, mesurée selon les méthodes BET, d'au moins 50 m²/g, de préférence supérieure à 70 m²/g, une dimension moyenne des particules primaires inférieures à 0,1 µm (micromètre) et une densité apparente inférieure à 200 g/litre.

Ces silices peuvent être incorporées telles quelles ou après avoir été traitées par des composés organosiliciques habituellement utilisés pour cet usage. Parmi ces composés figurent les méthylpolysiloxanes tels que l'hexaméthyldisiloxane, l'octaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthylchlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane.

Lors de ce traitement, les silices peuvent accroître leur poids de départ jusqu'à un taux de 20 %, de préférence 18 % environ.

Les charges semi-renforçantes ou de bourrage ont un diamètre particulaire supérieur à 0,1 µm (micromètre) et sont choisies parmi le quartz broyé, les argiles calcinées et les terres de diatomées.

On peut généralement utiliser de 0 à 100 parties, de préférence de 5 à 80 parties de charge pour 100 parties d'huile (A).

Les compositions de silicone définies ci-dessus réticulent à température ambiante en présence d'humidité apportée par l'air et/ou contenue dans la composition. Ces compositions dites à deux composantes ou à deux emballages sont décrites par exemple dans les brevets US-A-3 678 002, US-A-3 888 815, US-A-3 933 729, US-A-4 064 096 et GB-A-2 032 936.

Les catalyseurs (C) à l'étain sont abondamment décrits dans la littérature ci-dessus ; ce peut être en particulier un sel d'étain d'un acide mono- ou dicarboxylique. Ces carboxylates d'étain sont décrits notamment dans l'ouvrage de NOLL (Chemistry and Technology of Silicones, page 337, Academic Press, 1968, 2^{ème} édition).

On peut en particulier citer le naphténate, l'octanoate, l'oléate, le butyrate, le dilaurate de dibutylétain, le diacétate de dibutylétain.

On peut également utiliser comme composé catalytique à l'étain le produit de réaction d'un sel d'étain, en particulier d'un dicarboxylate d'étain sur du polysilicate d'éthyle comme décrit dans le brevet US-A-3 186 963.

On peut également utiliser le produit de réaction d'un dialkyldialcoxysilane sur un carboxylate d'étain comme décrit dans le brevet US-A-3 862 919.

On peut également utiiser le produit de réaction d'un silicate d'alkyle ou d'un alkytrialcoxysilane sur le diacétate de dibutylétain comme décrit dans le brevet belge BE-A-842 305.

Pour revenir sur les agents de réticulation (B), on préfère plus particulièrement les alkyltrialcoxysilanes, les silicates d'alkyle et les polysilicates d'alkyle, dans lesquels les radicaux organiques sont des radicaux alkyles ayant de 1 à 4 atomes de carbone.

Les silicates d'alkyle peuvent être choisis parmi le silicate de méthyle, le silicate d'éthyle, le silicate d'isopropyle, le silicate de n-propyle et les polysilicates choisis parmi les produits d'hydrolyse partielle de ces silicates ; ce sont des polymères constitués d'une proportion importante de motifs de formule (R⁴O)₃SiO_{0,5}, (R⁴O)SiO_{1,5}, (R⁴O)₂SiO et SiO₂ ; le symbole R⁴ représentant les radicaux méthyle, éthyle, isopropyle, n-propyle. Pour les caractériser, on se base habituellement sur leur teneur en silice qui est établie par dosage du produit d'hydrolyse d'un échantillon.

On peut en particulier utiliser comme polysilicate, un silicate d'éthyle partiellement hydrolysé commercialisé sous la marque "Ethyl Silicate-40®" par Union Carbide Corporation, ou un silicate de propyle partiellement hydrolysé.

Les compositions de polycondensation comprennent en outre, comme indiqué ci-avant, de 10 à 130 parties en poids d'huile(s) polydiméthylsiloxane(s) bloquée(s) à chacune des extrémités de chaînes par un motif (CH₃)₃ SiO_{0,5}, de viscosité à 25°C comprise entre 10 et 5000 mPa.s, pour 100 parties d'huile(s) (A).

Les compositions selon l'invention peuvent être mises en formes, extrudées ou en particulier moulées suivant des formes variées, puis être durcies à la température ambiante en un élastomère à l'humidité atmosphérique ou par addition d'eau. Un léger chauffage à une température de 20 à 150°C peut accélérer le ducissement.

Pour les modalités plus préférées du constituant (E), on se reportera aux indications données plus haut à propos des différents additifs (a), (b) et (c) et combinaisons synergiques d'additifs.

L'invention a encore pour objet les moules en élastomère silicone susceptibles d'être obtenus par réticulation d'une composition de polycondensation telle que décrite ci-dessus. Elle a également pour objet l'élastomère silicone obtenu.

La présente invention va être maintenant décrite plus en détail à l'aide de modes de réalisation pris à titre d'exemples non limitatifs.

### EXEMPLE

### Préparation de composition silicone réticulant à température ambiante par réaction de polycondensation

1) Mélange de base:
   On prépare un mélange de base par malaxage de :
   - 16,9 parties (en poids) de silice de pyrogénation ayant une surface spécifique BET de 300 m²/g, traitée par de l'hexaméthyldisilazane,
   - 30,2 parties d'une huile polydiméthylsiloxane bloquée à chacune des extrémités de chaînes par un motif (CH₃)₃SiO_{0,5} ayant une viscosité de 500 mPa.s à 25°C
   - 26,5 parties d'une huile polydiméthylsiloxane hydroxylée bloquée à chacune des extrémités de chaînes par un motif (CH₃)₂(OH)SiO_{0,5} ayant une viscosité de 14 000 mPa.s à 25°C,
   - 10 parties d'un agent de coloration à base d'un mélange de TiO₂ (60 % en poids) dans une huile polydiméthylsiloxane bloquée à chacune des extrémités de chaînes par un motif (CH₃)₃SiO_{0,5} ayant une viscosité de 1 000 mPa.s à 25 °C (40 % en poids),
   - 14,2 parties de quartz broyé présentant un diamètre moyen de particules de 10 µm,
   - 0,2 partie d'eau,
   - 0,2 partie d'une huile polydiméthylsiloxane hydroxylée bloquée à chacune des extrémités de chaînes par un motif (CH₃)₂(OH)SiO_{0,5} ayant une viscosité de 75 mPa.s à 25°C, et
   - la quantité voulue d'additif(s).
2) Mélange catalysé :
   Le mélange de base précité est homogénéisé pendant 1 heure à 23°C, et à 100 parties de ce mélange on ajoute 5 parties de catalyseur à base de polysilicate d'éthyle (28 % en poids) et de dilaurate de di-n-butylétain (3 % en poids) mis en solution dans une huile polydiméthylsiloxane bloquée à chacune des extrémités de chaînes par un motif (CH₃)₃ SiO_{0,5} ayant une viscosité de 50 mPa.s à 25°C.
3) Mise en oeuvre du silicone :
   Le mélange de base catalysé comme indiqué ci-avant, est homogénéisé pendant environ 1 minute à 23 °C, puis il est dégazé pendant environ 10 minutes sous un vide de 20.10² Pa. Le produit ainsi dégazé est ensuite coulé dans les moules appropriés. Le produit moulé est réticulé à température ambiante (23 °C), et on procède au démoulage au bout de 4 jours.
4) Des essais comparatifs (tableau 1) ont été réalisés sur la base de différents additifs. Des précisions sur certains additifs sont données ci-après.
   Thiodipropionate = ditridécyl thiodipropionate
   Tinuvin 123 (Ciba Geigy) = bis(1-octyloxy-2,2,6,6-tetraméthyl-4-pipéridyl) sébaçate
   Tinuvin 765 (Ciba Geigy) = bis(1,2,2,6,6,-pentaméthyl-4-pipéridyl) sébaçate
   Phosphite phénolique 29 : composé (XI)
   Phosphite phénolique 32 : composé (XII).
   Les résultats sont donnés en nombre de pièces en polyester qu'il a été possible de mouler avec un moule additionné comme indiqué.

La résine de polyester ayant servi aux moulages est une résine vendue par DSM (BASF) France sous la dénomination Synolite® 0328-A-1. La mise en oeuvre est la suivante :
- à 100 parties de résine, on ajoute 0,2 parties en poids d'octoate de cobalt (activateur) ; puis on ajoute 2 parties en poids de peroxyde de méthyléthylcétone pour 100 parties du mélange précédent.

**Tableau 1**

| Additifs | Teneur | Résultat (nombre de pièces) | | | | | |
|---|---|---|---|---|---|---|---|
| Essai | | 1 | 2 | 3 | 4 | 5 | 6 |
| Témoin | | 67 | 50 | 49 | 49 | 47 | X |
| Thiodipropionate | 1,5 | 54 | | | | | |
| | 2,5 | 60 | 65 | 59 | | | |
| | 3 | 71 | | | | 63 | |
| TLPE | 2,5 | | | 61 | | | |
| Tinuvin 123 | 0,5 | 52 | 57 | 63 | 68 | 67 | |
| Tinuvin 765 | 0,5 | | | | | 43 | |
| Oléate cuivrique | 0,5 | | | | 33 | | |
| Tinuvin 123/ Thiopropionate | 0,5/2,5 | | 72 | | | | |
| | 1/2,5 | | | 72 | | | |
| Tinuvin 765/ Thiodipropionate | 0,5/2,5 | | | | | 58 | |
| Oléate cuivrique/ ThiodiDipropionate | 0,5/2,5 | | - | | 46 | | |
| Tinuvin123/ Phosphite phénolique29 | 1/0.11 | | | 72 | | | |
| Teneur : parties en poids pour 100 parties de composition silicone | | | | | | | |

## Revendications

1. Utilisation, pour augmenter la longévité des moules réalisés en élastomère silicone réticulant par réaction de polyaddition ou de polycondensation, d'additif capable de stabiliser l'élastomère silicone constituant le moule vis-à-vis des matières à mouler, l'additif étant choisi dans le groupe consistant en :
- (a) additifs antioxydant pris dans le groupe formé par :
(a-i) un thiodipropionate de formule : 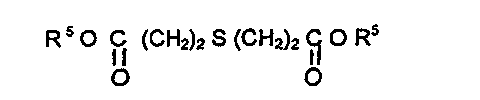 dans laquelle R⁵ est un groupe alkyle ayant de 1 à 15 atomes de carbone inclus, et
(a-2i) un tétra(thioéther)pentaérythritol où les restes thoiéthers sont des groupements thiopropionates ;
- association synergique (a) + (b), où (b) correspond à des additifs inhibiteurs de radicaux libres capables, dans les conditions du moulage, de générer des radicaux : 〉N-O•, choisis parmi les composés de formule :
- 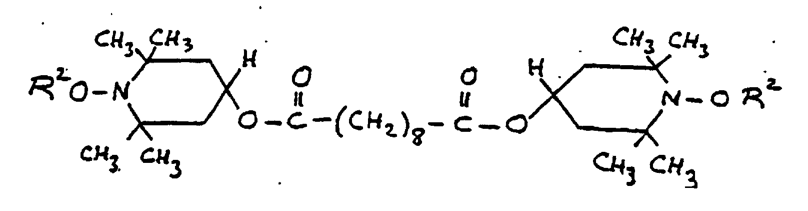 où R² est un alkyle linéaire ou ramifié en C1 à C18, éventuellement substitué par un ou plusieurs groupes phényle(s), ou un cycloalkyle en C5 à C6 ou un benzyle,
- association synergique (a) et (b) avec des phosphites (c) où les phosphites (c) sont choisis parmi des phosphites mixtes d'aryle et d'alkyle des formules V à XIII suivantes : 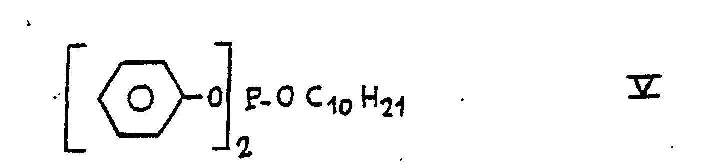 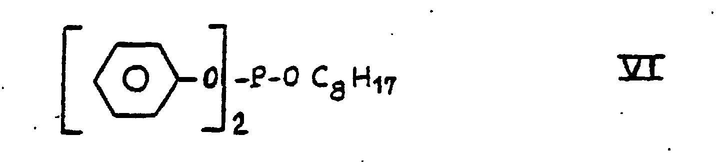 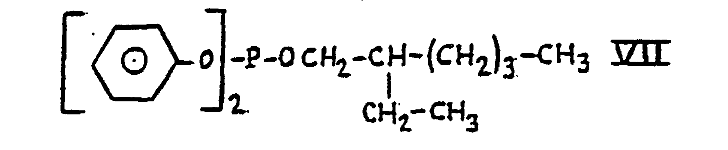 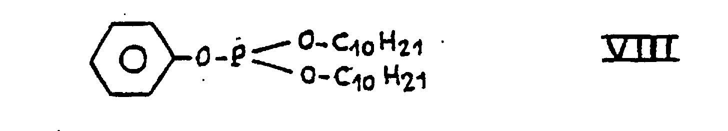 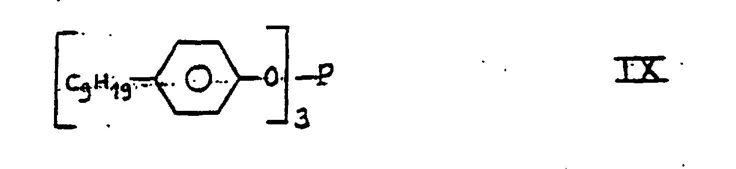 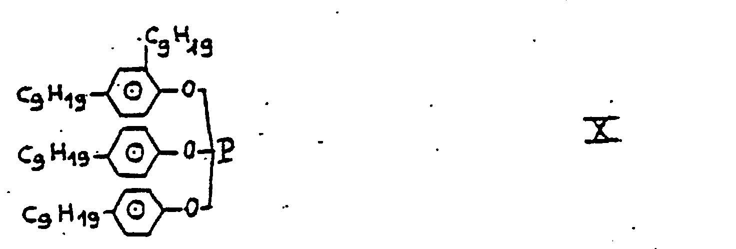 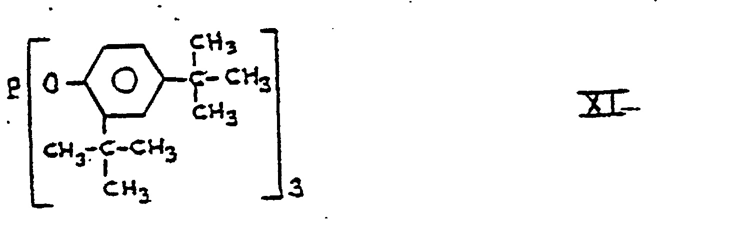 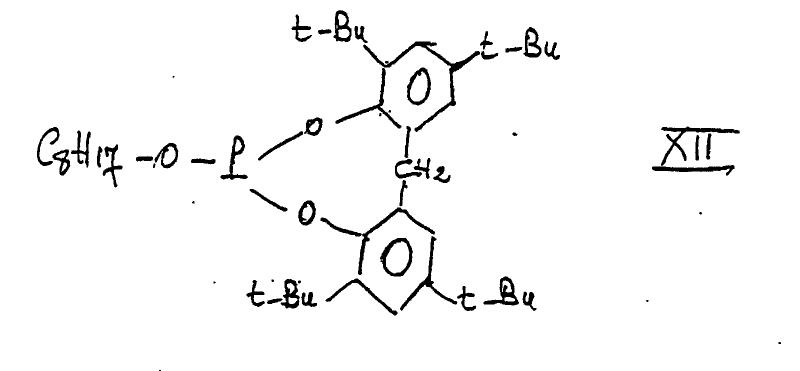 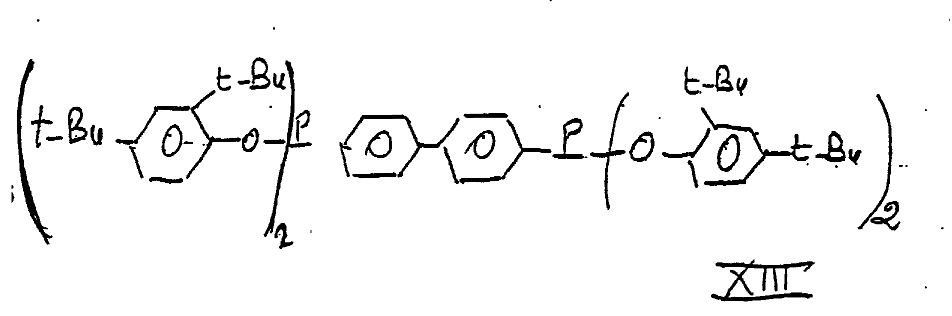
- l'additif (a) étant utilisé à raison de 1 à 5 parties en poids, l'additif (b) étant utilisé à raison de 0,2 à 1 partie en poids et l'additif (c) étant utilisé à raison de 0,05 à 1 partie en poids, pour 100 parties de composition silicone servant à réaliser l'élastomère silicone.

2. Utilisation selon la revendication 1 pour la stabilisation des élastomères silicones constitutifs de moules destinés au moulage de pièces en résine polyester.

3. Utilisation selon la revendication 1 ou 2, **caractérisée en ce que** l'additif (a-i) est choisi dans le groupe constituant en :
- ditridécyl thiodipropionate
- distéaryl-3,3'-thiodipropionate
- dilauryl-3,3'-thiodipropionate.

4. Utilisation selon la revendication 1 ou 2, **caractérisée en ce que** l'additif (a-2i) est le tétra(lauryl thiopropionate) pentaérythritol.

5. Utilisation selon l'une quelconque des revendications 1 à 4, **caractérisée en ce que** l'additif (b) est le bis-(1-octyloxy-2,2,6,6-tetraméthyl-4-pipéridyl)sébaçate.

6. Utilisation selon l'une quelconque des revendications 1 à 5, **caractérisée en ce que** le phosphite (c) est choisi parmi les phosphites de formules XI et/ou XII.

7. Composition silicone bicomposante précurseur d'élastomère silicone et réticulable par une réaction de polycondensation, comprenant :
• (A) : 100 parties d'une huile alpha-oméga-dihydroxydiorganopolysiloxane de viscosité de 50 à 300 000 mPa.s dont les radicaux organiques sont choisis parmi les radicaux méthyle, éthyle, vinyle, phényle et trifluoro-3,3,3 propyle, au moins 60 % en nombre étant des radicaux méthyle, éventuellement jusqu'à 20 % en nombre étant des radicaux phényle, et éventuellement au plus 2 % étant des radicaux vinyle,
• (B) : de 0,5 à 15 parties d'un polyalcoxysilane ou polyalcoxysiloxane,
• (C) : de 0,01 à 1 partie (calculée en poids d'étain métal) d'un composé catalytique de l'étain,
• (D) : de 0 à 100 parties de charge minérale siliceuse et de 10 à 130 parties en poids d'huile(s) polydiméthylsiloxane(s) bloquée(s) à chacune des extrémités de chaînes par un motif (CH₃)₃SiO_{0,5} de viscosité comprise entre 10 et 5000 mPa.s,
• (E) : un additif capable de stabiliser l'élastomère silicone constituant le moule vis-à-vis des matières à mouler, l'additif étant choisi dans le groupe consistant en :
- (a) additifs antioxydant pris dans le groupe formé par :
(a-i) un thiodipropionate de formule : 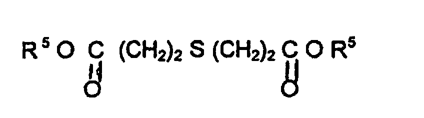 dans laquelle R⁵ est un groupe alkyle ayant de 1 à 15 atomes de carbone inclus, et
(a-2i) un tétra(thioéther)pentaérythritol où les restes thoiéthers sont des groupements thiopropionates ;
- association synergique (a) + (b) où (b) correspond à des additifs inhibiteurs de radicaux libres capables, dans les conditions du moulage, de générer des radicaux : 〉N-O•, choisis parmi les composés de formule : 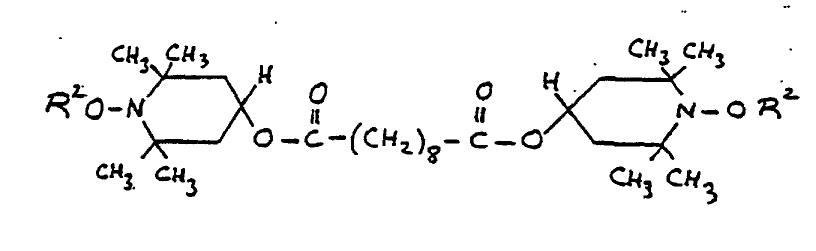
où R² est un alkyle linéaire ou ramifié en C1 à C18, éventuellement substitué par ur ou plusieurs groupes phényle(s), ou un cycloalkyle en C5 à C6 ou un benzyle,
- association synergique (a) et (b) avec des phosphites (c) où les phosphites (c) sont choisis parmi des phosphites mixtes d'aryle et d'alkyle des formules V à XIII suivantes : 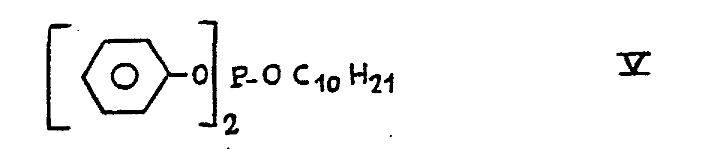 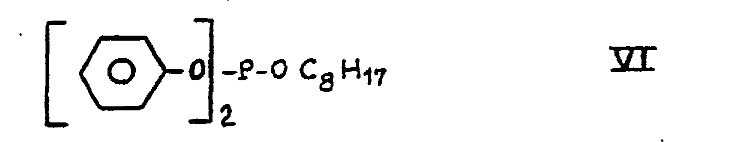 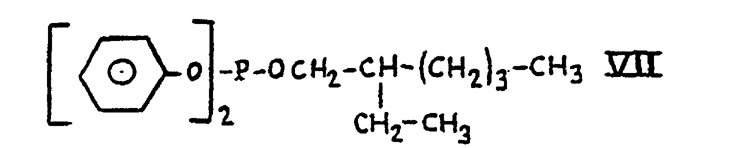 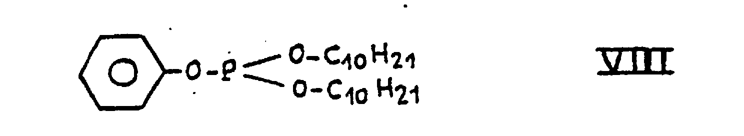 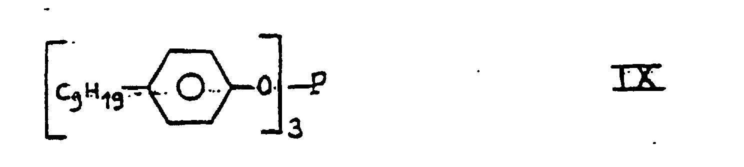 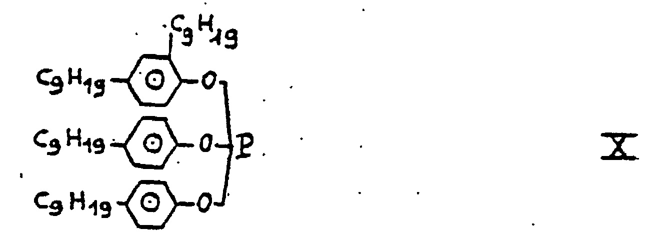 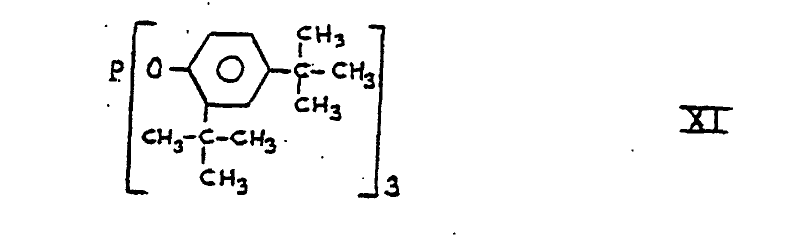 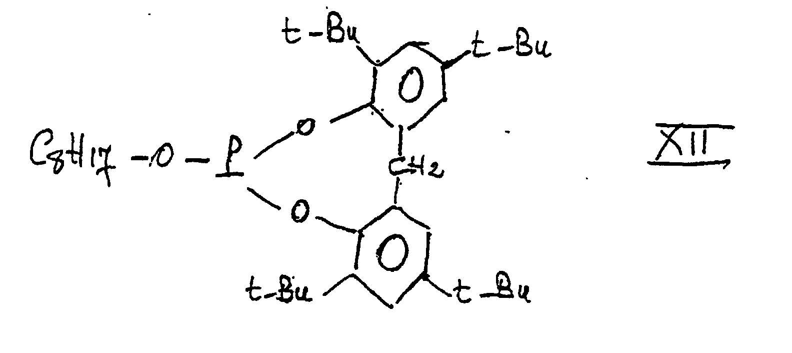 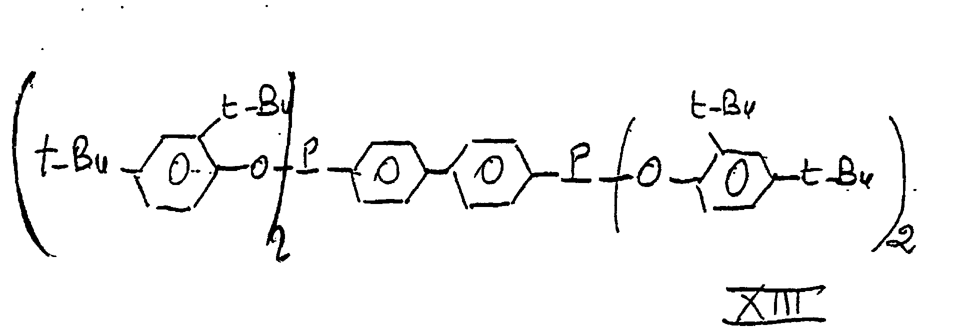
- l'additif (a) étant utilisé à raison de 1 à 5 parties en poids, l'additif (b) étant utilisé à raison de 0,2 à 1 partie en poids et l'additif (c) étant utilisé à raison de 0,05 à 1 partie en poids, pour 100 parties de composotion silicone servant à réaliser l'élastomère silicone.

8. Composition selon la revendication 7, **caractérisée en ce que** l'additif (a-i) est choisi dans le groupe consistant en :
- ditridécyl thiodipropionate
- distéaryl-3,3'-thiodipropionate
- dilauryl-3,3'-thiodipropionate.

9. Composition selon la revendication 7 ou 8, **caractérisée en ce que** l'additif (a-2i) est le tétra(lauryl thiopropionate) pentaérythritol.

10. Composition selon l'une quelconque des revendications 7 à 9, **caractérisée en ce que** l'additif (b) est le bis-(1-octyloxy-2,2,6,6-tetraméthyl-4-pipéridyl)sébaçate.

11. Composition selon l'une quelconque des revendications 7 à 10, **caractérisée en ce que** le phosphites(c) est choisi parmi les phosphites de formules XI et/ou XII.

## Claims

1. Use, in increasing the longevity of moulds prepared from silicone elastomer crosslinking by a polyaddition or polycondensation reaction, of an additive capable of stabilizing the silicone elastomer constituting the mould with respect to the materials to be moulded, the additive being chosen from the group consisting of:
- antioxidant additives (a) taken from the group formed by:
(a-i) a thiodipropionate of formula: 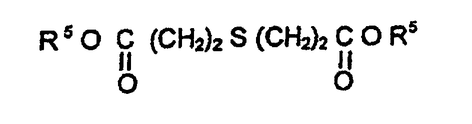 in which R⁵ is an alkyl group having from 1 to 15 carbon atoms inclusive, and
(a-2i) a tetra(thioether)pentaerythritol where the thioether residues are thiopropionate groups;
- synergistic combination (a) + (b), where (b) corresponds to additives which inhibit free radicals capable, under the moulding conditions, of generating radicals: 〉N - O•, chosen from the compounds of formula: 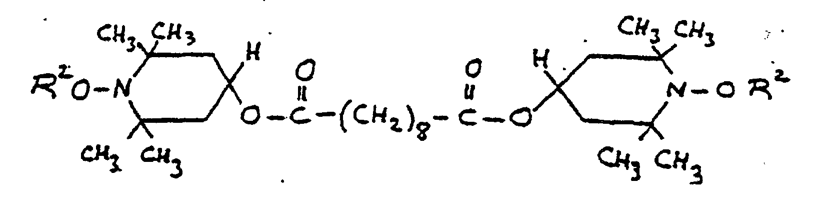
where R² is a linear or branched C₁ to C₁₈ alkyl, optionally substituted by one or more phenyl groups, or a C₅ to C₆ cycloalkyl or a benzyl,
- synergistic combination (a) and (b) with phosphites (c), where the phosphites (c) are chosen from mixed aryl and alkyl phosphites of the following formulae V to XIII: 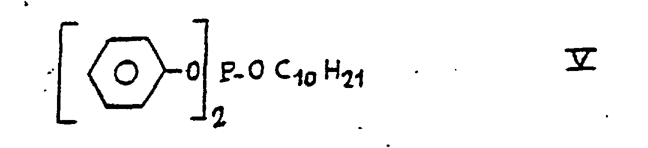 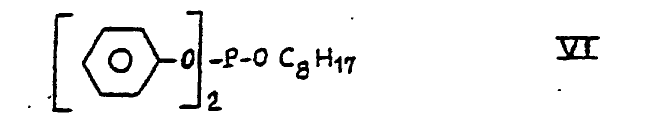 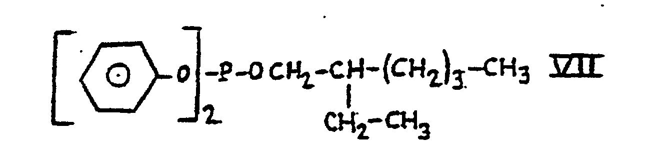 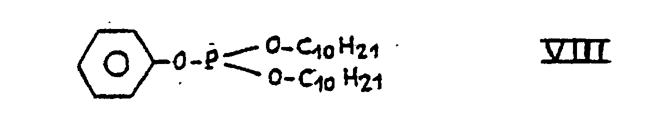 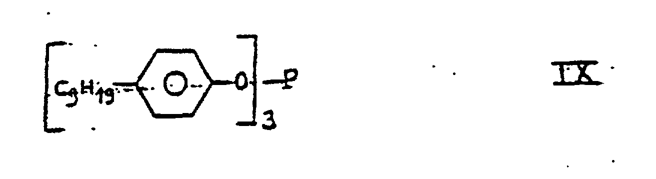 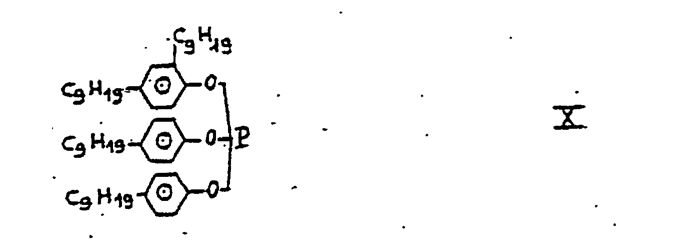 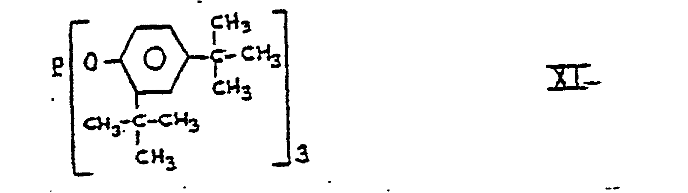 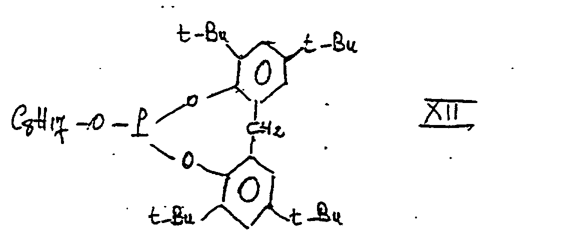 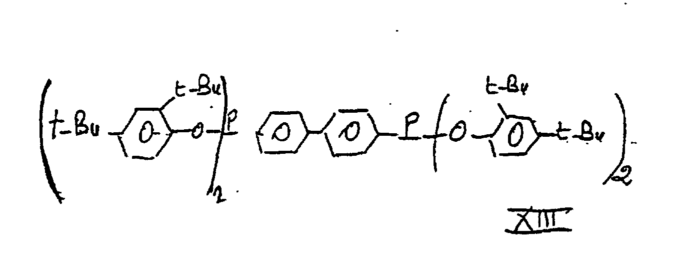
- the additive (a) being used in a proportion of 1 to 5 parts by weight, the additive (b) being used in a proportion of 0.2 to 1 part by weight and the additive (c) being used in a proportion of 0.05 to 1 part by weight, per 100 parts of silicone composition used to prepare the silicone elastomer.

2. Use according to claim 1, in the stabilization of the constituent silicone elastomers of moulds intended for the moulding of components made of polyester resin.

3. Use according to claim 1 or 2, **characterized in that** the additive (a-i) is chosen from the group consisting of:
- ditridecyl thiodipropionate
- distearyl 3,3'-thiodipropionate
- dilauryl 3,3'-thiodipropionate.

4. Use according to claim 1 or 2, **characterized in that** the additive (a-2i) is pentaerythritol tetra(lauryl thiopropionate).

5. Use according to any one of claims 1 to 4, **characterized in that** the additive (b) is bis(1-octyloxy-2,2,6,6-tetramethyl-4-piperidyl) sebacate.

6. Use according to any one of claims 1 to 5, **characterized in that** the phosphite (c) is chosen from the phosphites of formulae XI and/or XII.

7. Two-component silicone composition which is a silicone elastomer precursor and which can be crosslinked by a polycondensation reaction, comprising:
• (A): 100 parts of an α,ω-dihydroxydiorganopolysiloxane oil with a viscosity of 50 to 300 000 mPa·s, the organic radicals of which are chosen from methyl, ethyl, vinyl, phenyl and 3,3,3-trifluoropropyl radicals, at least 60% by number being methyl radicals, optionally up to 20% by number being phenyl radicals and optionally at most 2% being vinyl radicals,
• (B): from 0.5 to 15 parts of a polyalkoxysilane or polyalkoxysiloxane,
• (C): from 0.01 to 1 part (calculated as weight of tin metal) of a catalytic tin compound,
• (D): from 0 to 100 parts of siliceous inorganic filler and from 10 to 130 parts by weight of polydimethylsiloxane oil(s) blocked at each of the chain ends by a (CH₃)₃SiO_{0.5} unit, with a viscosity of between 10 and 5 000 mPa·s,
• (E): an additive capable of stabilizing the silicone elastomer constituting the mould with respect to the materials to be moulded, the additive being chosen from the group consisting of:
- antioxidant additives (a) taken from the group formed by:
(a-i) a thiodipropionate of formula: 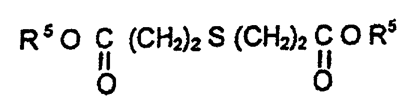 in which R⁵ is an alkyl group having from 1 to 15 carbon atoms inclusive, and
(a-2i) a tetra(thioether)pentaerythritol where the thioether residues are thiopropionate groups;
- synergistic combination (a) + (b), where (b) corresponds to additives which inhibit free radicals capable, under the moulding conditions, of generating radicals: 〉N-O•, chosen from the compounds of formula: 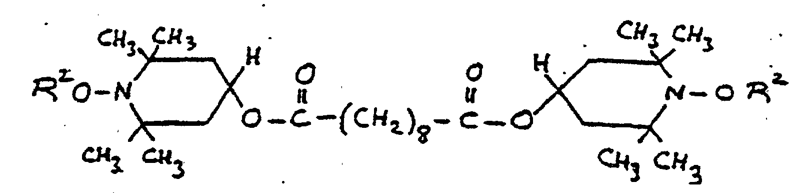 where R² is a linear or branched C₁ to C₁₈ alkyl, optionally substituted by one or more phenyl groups, or a C₅ to C₆ cycloalkyl or a benzyl,
- synergistic combination (a) and (b) with phosphites (c), where the phosphites (c) are chosen from mixed aryl and alkyl phosphites of the following formulae V to XIII: 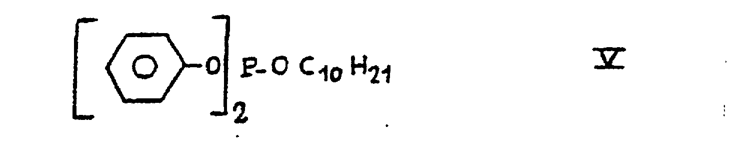 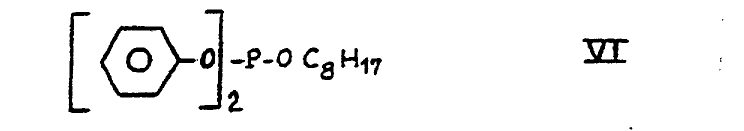 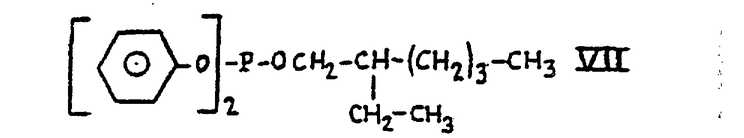 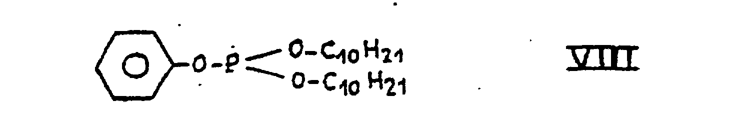 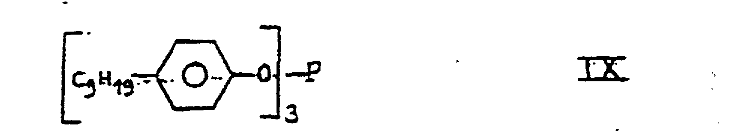 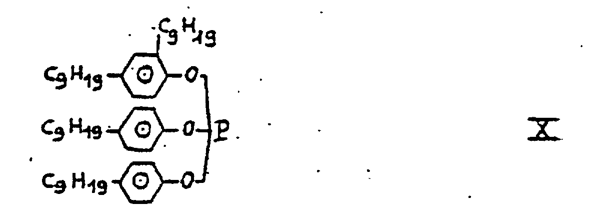 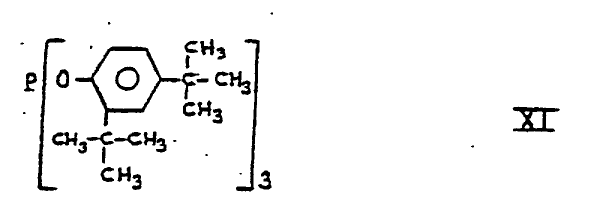 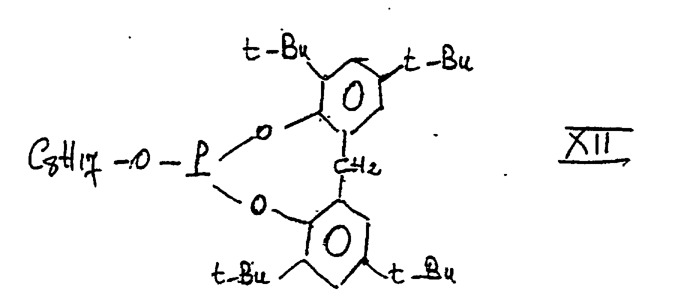 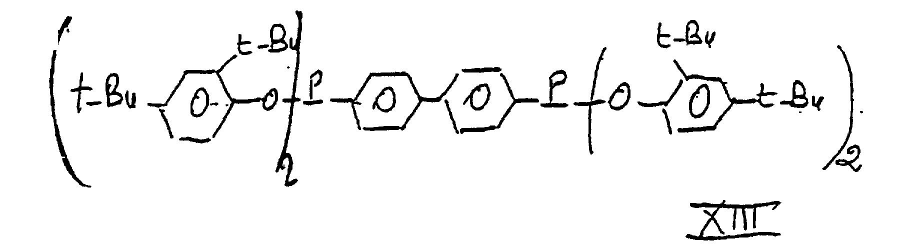
- the additive (a) being used in a proportion of 1 to 5 parts by weight, the additive (b) being used in a proportion of 0.2 to 1 part by weight and the additive (c) being used in a proportion of 0.05 to 1 part by weight, per 100 parts of silicone composition used to prepare the silicone elastomer.

8. Composition according to claim 7, **characterized in that** the additive (a-i) is chosen from the group consisting of:
- ditridecyl thiodipropionate
- distearyl 3,3'-thiodipropionate
- dilauryl 3,3'-thiodipropionate.

9. Composition according to claim 7 or 8, **characterized in that** the additive (a-2i) is pentaerythritol tetra(lauryl thiopropionate).

10. Composition according to any one of claims 7 to 9, **characterized in that** the additive (b) is bis(1-octyloxy-2,2,6,6-tetramethyl-4-piperidyl) sebacate.

11. Composition according to any one of claims 7 to 10, **characterized in that** the phosphite (c) is chosen from the phosphites of formulae XI and/or XII.

## Patentansprüche

1. Verwendung zur Erhöhung der Langlebigkeit der Formen, die aus Siliconelastomer, das durch Polyadditions- oder Polykondensationsreaktion vernetzt, hergestellt sind, von Zusatzstoff, der das Siliconelastomer, das die Form bildet, gegenüber den zu gießenden Materialien stabilisieren kann, wobei der Zusatzstoff ausgewählt ist aus der Gruppe, die besteht aus:
- (a) Antioxidationszusatzstoffen aus der Gruppe, die gebildet wird von:
(a-i) einem Thiodipropionat der Formel: 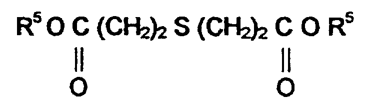 worin R⁵ eine Alkylgruppe mit einschließlich 1 bis 15 Kohlenstoffatomen ist, und
(a-2i) einem Tetra(thioether)pentaerythrit, worin die Thioetherreste Thiopropionatgruppen sind;
- einer synergistischen Kombination (a) + (b), worin (b) Zusatzstoffen entspricht, die freie Radikale inhibieren und unter den Bedingungen des Gießens Reste: 〉N-O• bilden können, ausgewählt unter den Verbindungen der Formel: 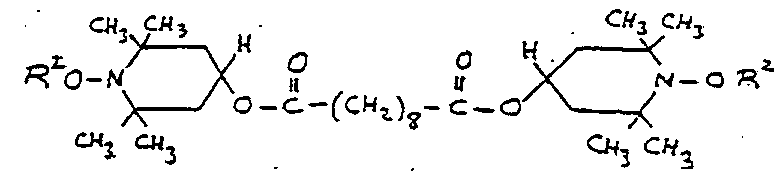 worin R² ein lineares oder verzweigtes C₁- bis C₁₈-Alkyl, gegebenenfalls substituiert mit einer oder mehreren Phenylgruppen, oder ein C₅- bis C₆-Cycloalkyl oder ein Benzyl ist,
- einer synergistischen Kombination (a) und (b) mit Phosphiten (c), worin die Phosphite (c) ausgewählt sind unter gemischten Aryl- und Alkylphosphiten der folgenden Formeln V bis XIII: 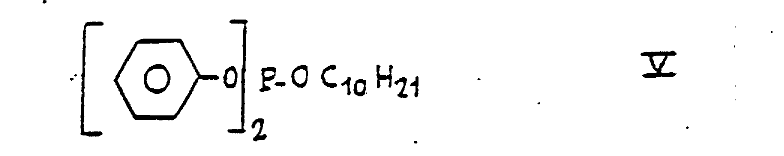 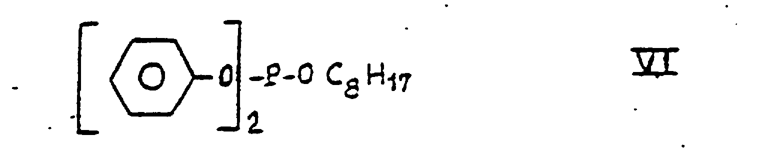 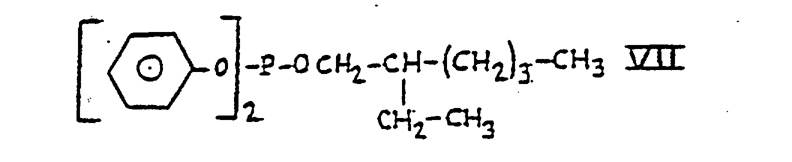 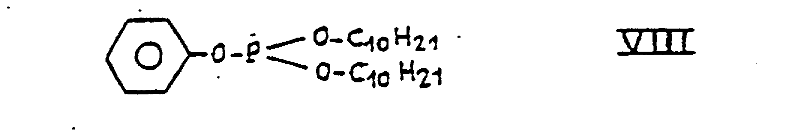 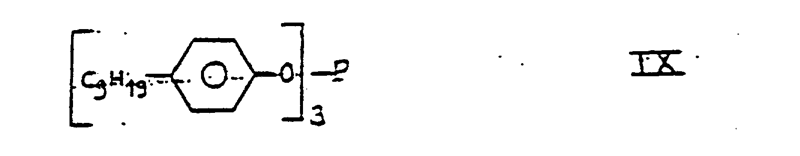 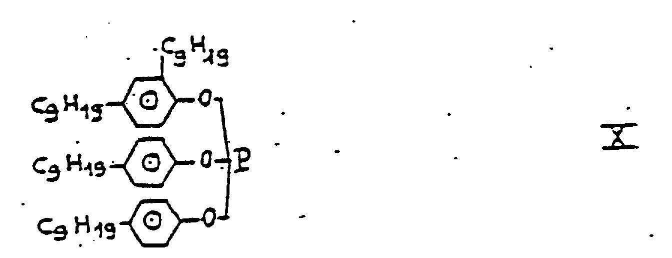 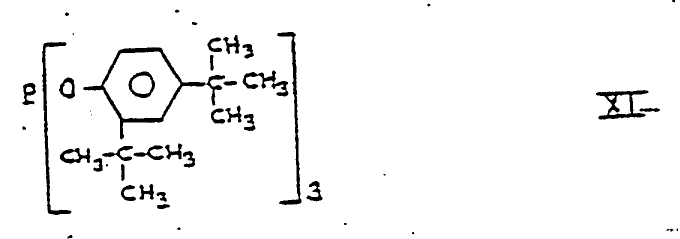 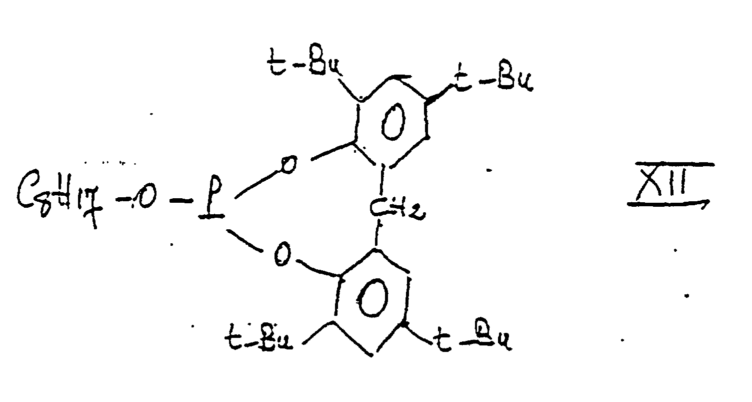 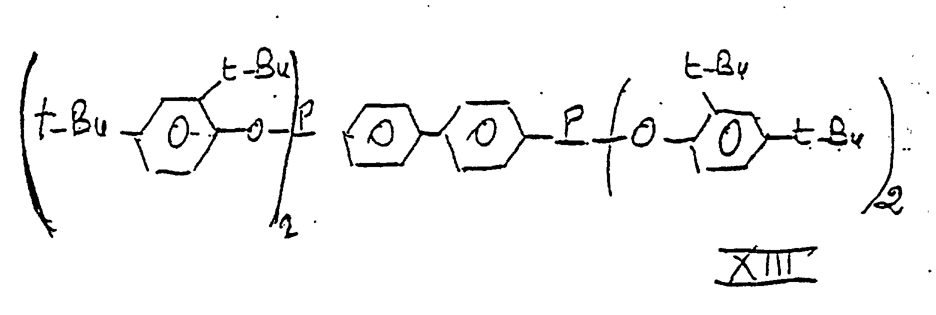
- wobei der Zusatzstoff (a) in einer Menge von 1 bis 5 Gew.-Teilen verwendet wird, der Zusatzstoff (b) in einer Menge von 0,2 bis 1 Gew.-Teil verwendet wird und der Zusatzstoff (c) in einer Menge von 0,05 bis 1 Gew.-Teil verwendet wird auf 100 Teile Siliconzusammensetzung, die zur Herstellung des Siliconelastomers dient.

2. Verwendung gemäß Anspruch 1 für die Stabilisierung der Grundsiliconelastomere von Formen, die für das Gießen von Teilen aus Polyesterharz bestimmt sind.

3. Verwendung gemäß Anspruch 1 oder 2, **dadurch gekennzeichnet, dass** der Zusatzstoff (a-i) aus der Gruppe ausgewählt ist, die besteht aus:
- Ditridecylthiodipropionat
- Distearyl-3,3'-thiodipropionat
- Dilauryl-3,3'-thiodipropionat.

4. Verwendung gemäß Anspruch 1 oder 2, **dadurch gekennzeichnet, dass** der Zusatzstoff (a-2i) Tetra(laurylthiopropionat)pentaerythrit ist.

5. Verwendung gemäß einem der Ansprüche 1 bis 4, **dadurch gekennzeichnet, dass** der Zusatzstoff (b) Bis-(1-octyloxy-2,2,6,6-tetramethyl-4-piperidyl)sebacat ist.

6. Verwendung gemäß einem der Ansprüche 1 bis 5, **dadurch gekennzeichnet, dass** das Phosphit (c) unter den Phosphiten der Formeln XI und/oder XII ausgewählt ist.

7. Zweikomponentensiliconzusammensetzung, Vorstufe von Siliconelastomer und vernetzbar durch eine Polykondensationsreaktion, umfassend:
• (A): 100 Teile eines alpha-omega-Dihydroxydiorganopolysiloxanöls mit einer Viskosität von 50 bis 300 000 mPa·s, dessen organische Reste ausgewählt sind unter den Resten Methyl, Ethyl, Vinyl, Phenyl und 3,3,3-Trifluorpropyl, wobei wenigstens 60 Zahlen-% Methylreste sind, gegebenenfalls bis zu 20 Zahlen-% Phenylreste sind und gegebenenfalls höchstens 2% Vinylreste sind,
• (B): 0,5 bis 15 Teile eines Polyalkoxysilans oder Polyalkoxysiloxans,
• (C): 0,01 bis 1 Teil (berechnet in Gewicht Zinnmetall) einer katalytischen Zinnverbindung,
• (D): 0 bis 100 Teile kieselsäurehaltigen mineralischen Füllstoff und 10 bis 130 Gew.-Teile Polydimethylsiloxanöl(e), blockiert an jedem der Kettenenden durch eine Einheit (CH₃)₃SiO_{0,5}, mit einer Viskosität zwischen 10 und 5000 mPa·s,
• (E): einen Zusatzstoff, der das Siliconelastomer, das die Form bildet, gegenüber den zu gießenden Materialien stabilisieren kann, wobei der Zusatzstoff ausgewählt ist aus der Gruppe, die besteht aus:
- (a) Antioxidationszusatzstoffen aus der Gruppe, die gebildet wird von:
(a-i) einem Thiodipropionat der Formel: 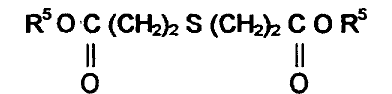 worin R⁵ eine Alkylgruppe mit einschließlich 1 bis 15 Kohlenstoffatomen ist, und
(a-2i) einem Tetra(thioether)pentaerythrit, worin die Thioetherreste Thiopropionatgruppen sind;
- einer synergistischen Kombination (a) + (b), worin (b) Zusatzstoffen entspricht, die freie Radikale inhibieren und unter den Bedingungen des Gießens Reste: 〉N-O• bilden können, ausgewählt unter den Verbindungen der Formel: 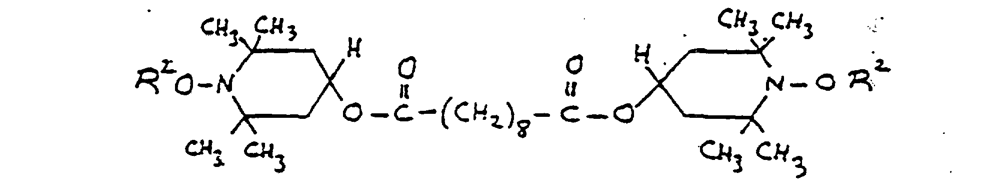
worin R² ein lineares oder verzweigtes C₁- bis C₁₈-Alkyl, gegebenenfalls substituiert mit einer oder mehreren Phenylgruppen, oder ein C₅- bis C₆-Cycloalkyl oder ein Benzyl ist,
- einer synergistischen Kombination (a) und (b) mit Phosphiten (c), worin die Phosphite (c) ausgewählt sind unter gemischten Aryl- und Alkylphosphiten der folgenden Formeln V bis XIII: 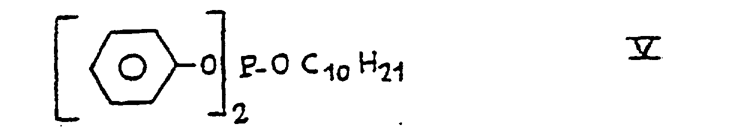 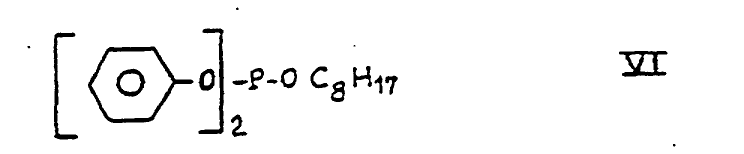 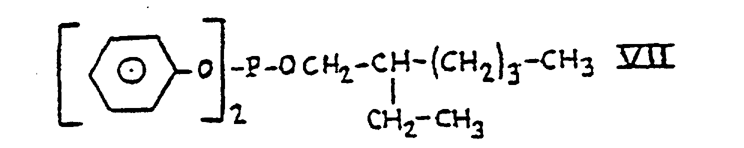 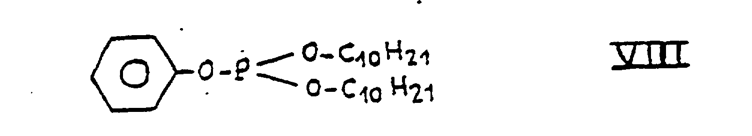 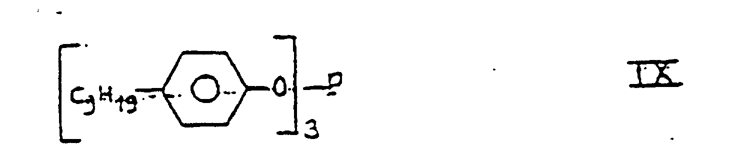 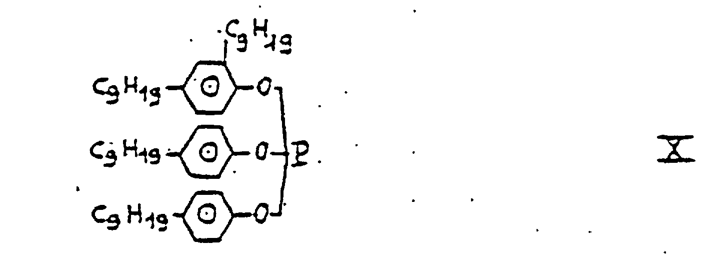 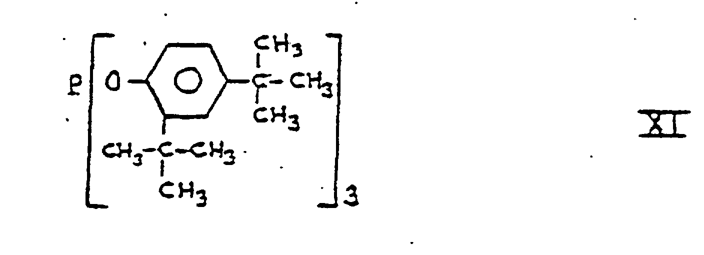 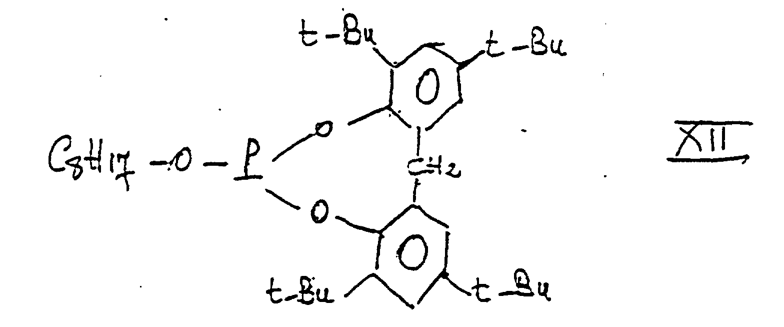 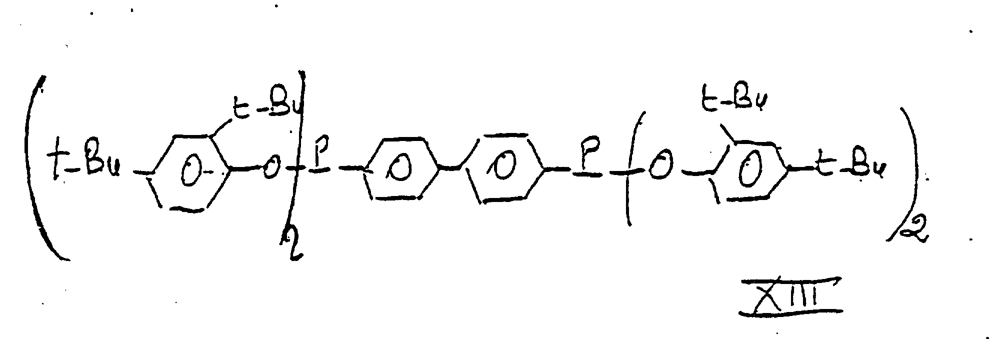
- wobei der Zusatzstoff (a) in einer Menge von 1 bis 5 Gew.-Teilen verwendet wird, der Zusatzstoff (b) in einer Menge von 0,2 bis 1 Gew.-Teil verwendet wird und der Zusatzstoff (c) in einer Menge von 0,05 bis 1 Gew.-Teil verwendet wird auf 100 Teile Siliconzusammensetzung, die zur Herstellung des Siliconelastomers dient.

8. Zusammensetzung gemäß Anspruch 7, **dadurch gekennzeichnet, dass** der Zusatzstoff (a-i) aus der Gruppe ausgewählt ist, die besteht aus:
- Ditridecylthiodipropionat
- Distearyl-3,3'-thiodipropionat
- Dilauryl-3,3'-thiodipropionat.

9. Zusammensetzung gemäß Anspruch 7 oder 8, **dadurch gekennzeichnet, dass** der Zusatzstoff (a-2i) Tetra(laurylthiopropionat)pentaerythrit ist.

10. Zusammensetzung gemäß einem der Ansprüche 7 bis 9, **dadurch gekennzeichnet, dass** der Zusatzstoff (b) Bis-(1-octyloxy-2,2,6,6-tetramethyl-4-piperidyl)-sebacat ist

11. Zusammensetzung gemäß einem der Ansprüche 7 bis 10, **dadurch gekennzeichnet, dass** das Phosphit (c) unter den Phosphiten der Formeln XI und/oder XII ausgewählt ist.
